# EUROPÄISCHE PATENTSCHRIFT

(11) **EP 0 954 214 B1**
(45) Veröffentlichungstag und Bekanntmachung des Hinweises auf die Patenterteilung: **18.09.2002**
(21) Anmeldenummer: 98955251.8
(22) Anmeldetag: 09.11.1998
(51) Int. Cl.: A01D 41/14

(54) **VORBAUZUSATZGERÄT FÜR MÄHDRESCHER ZUR SOJA- UND ERBSENERNTE**
UPSTREAM IMPLEMENT FOR COMBINED HARVESTER-THRESHER FOR HARVESTING SOYBEANS AND PEAS
OUTIL AMONT DE MOISSONNEUSE-BATTEUSE DESTINE A LA RECOLTE DU SOJA ET DE POIS

(30) Priorität: 07.11.1997 AT 188897
(43) Veröffentlichungstag der Anmeldung: 10.11.1999
(73) Patentinhaber: Schrattenecker, Franz, A-4773 Eggerding (AT)
(72) Erfinder: Schrattenecker, Franz, A-4773 Eggerding (AT)
(74) Vertreter: Hübscher, Helmut, Dipl.-Ing.
(86) Internationale Anmeldenummer: AT9800275
(87) Internationale Veröffentlichungsnummer: WO99023870

(56) Entgegenhaltungen:
- DE-A- 3 512 619
- DE-A- 19 632 895
- FR-A- 1 335 868
- FR-A- 2 053 603
- FR-A- 2 290 830
- US-A- 2 867 962
- US-A- 3 662 525

## Beschreibung

Die Erfindung bezieht sich auf ein Vorbauzusatzgerät für Mähdrescher zur Soja- und Erbsenernte mit einem federnd aufgehängten Zusatzschneidwerk, dessen Messerantrieb vom Schneidwerksantrieb des Mähdreschers ableitbar ist; ein derartiges gerät ist bereits aus der US-A-2 867 962 bekannt.

Um Getreide-Mähdrescher auch zur Soja- und Erbsenernte einsetzen zu können, gibt es spezielle Vorbauzusatzgeräte mit einem eigenen Zusatzschneidwerk, welche Vorbauzusatzgeräte am Mähdrescherschneidwerk angesetzt und mit dem Schneidwerksantrieb des Mähdrescherantriebes verbunden werden. Bisher besteht allerdings die Antriebsverbindung zwischen dem Messerantrieb des Zusatzschneidwerkes und dem Mähdrescherschneidwerksantrieb aus Schubstangen u. dgl. Hebelgestänge, was umständlich ist und häufig zu Störungen führt.

Der Erfindung liegt daher die Aufgabe zugrunde, ein Vorbauzusatzgerät der eingangs geschilderten Art zu schaffen, dessen Messerantrieb bei einfacher Kopplung an den Mähdrescherschneidwerksantrieb einen funktionssicheren Betrieb des Zusatzschneidwerkes mit sich bringt.

Die Erfindung löst diese Aufgabe dadurch, daß der Messerantrieb ein über einen Riementrieb an den Schneidwerksantrieb des Mähdreschers anschließbares Ölbadgetriebe aufweist, das auf einer seitlichen, mittels eines Schwenkarmes am Mähdrescherschneidwerk um eine horizontale Querachse verschwenkbar angelenkten Gleitkufe aufgebaut ist. Das Ölbadgetriebe erlaubt einen sicheren, weitgehend wartungsfreien Messerantrieb des Zusatzschneidwerkes und läßt sich mittels des Riementriebes auch mit wenigen Handgriffen an den Schneidwerksantrieb des Mähdreschers, beispielsweise an das für diesen Schneidwerksantrieb vorgesehene Ölbadgetriebe ankoppeln. Die Abstützung über die Gleitkufe bietet dabei dem Ölbadgetriebe eine mit dem federnden Zusatzschneidwerk mitbewegbare Lagerung, so daß sich eine einwandfreie Antriebsverbindung zwischen Ölbadgetriebe und Messerbalken od. dgl. des Zusatzschneidwerkes ergibt.

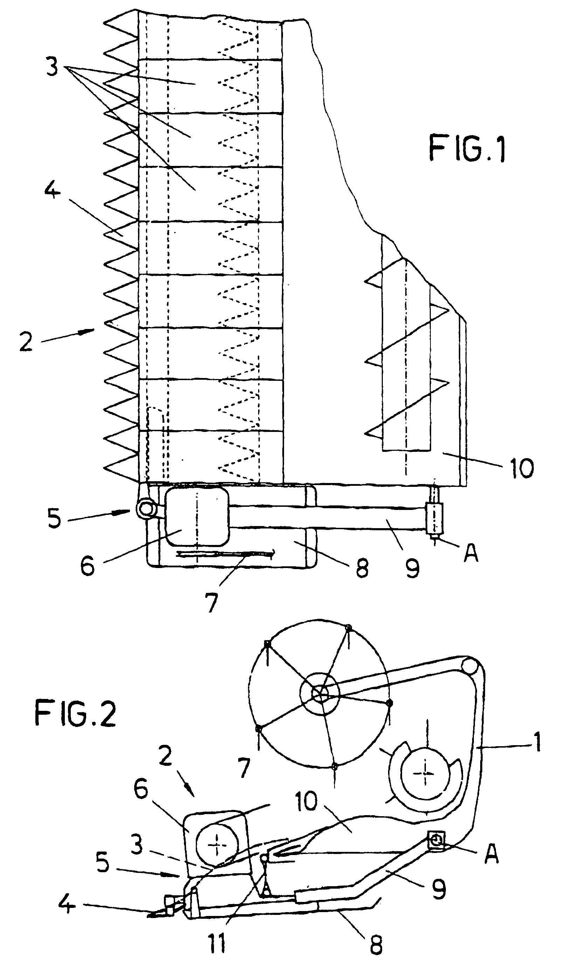

In der Zeichnung ist der Erfindungsgegenstand rein schematisch veranschaulicht, und zwar zeigen
- Fig. 1 und 2: ein erfindungsgemäßes Vorbauzusatzgerät in Draufsicht bzw. in Seitenansicht.

Zur Soja- und Erbsenernte wird an einen nur angedeuteten Mähdrescher 1 ein Vorbauzusatzgerät 2 angesetzt, das ein über Federbleche 3 federnd aufgehängtes Zusatzschneidwerk 4 aufweist. Der zugehörende Messerantrieb 5 umfaßt ein Ölbadgetriebe 6, das über einen Riementrieb 7 mit dem nicht weiter dargestellten Schneidwerksantrieb des Mähdreschers 1 in Antriebsverbindung steht. Das Ölbadgetriebe 6 ist auf einer Gleitkufe 8 aufgebaut, die über einen Schwenkarm 9 um eine horizontale Querachse A schwenkverstellbar am Schneidwerk 10 des Mähdreschers 1 angelenkt ist, wobei zusätzlich zur Abstützung und Bewegungskopplung eine federelastische Halterung 11 zwischen Schneidwerk 1 und Gleitkufe 8 vorgesehen ist.

## Patentansprüche

1. Vorbauzusatzgerät (2) für Mähdrescher (1) zur Soja- und Erbsenernte mit einem federnd aufgehängten Zusatzschneidwerk (4), dessen Messerantrieb (5) vom Schneidwerksantrieb des Mähdreschers (1) ableitbar ist, **dadurch gekennzeichnet, daß** der Messerantrieb (5) ein über einen Riementrieb (7) an den Schneidwerksantrieb des Mähdreschers (1) anschließbares Ölbadgetriebe (6) aufweist, das auf einer seitlichen, mittels eines Schwenkarmes (9) am Mähdrescherschneidwerk (10) um eine honzontale Querachse (A) verschwenkbar angelenkten Gleitkufe (8) aufgebaut ist.

## Claims

1. A supplementary front attachment (2) for combine harvesters (1) for harvesting soya beans and peas, comprising a spring-suspended supplementary cutting mechanism (4), the knife drive (5) of which can be derived from the cutting mechanism drive of the combine harvester (1), **characterised in that** the knife drive (1) comprises an oil bath gear (6) which can be connected via a belt drive (7) to the cutting mechanism drive of the combine harvester (1), said oil bath gear being mounted on a side skid (8) articulated on the combine harvester cutting mechanism (10) by means of a pivot arm (9) so as to be pivotable about a horizontal transverse axis (A).

## Revendications

1. Outil amont (2) pour une moissonneuse-batteuse (1) pour la récolte du soja et de pois, avec un mécanisme de découpage additionnel (4) suspendu élastiquement, dont l'entraînement de lame (5) peut être prélevé de l'entraînement de mécanisme de découpage de la moissonneuse-batteuse (1), **caractérisé en ce que** l'entraînement de lame (5) présente une transmission à bain d'huile (6), pouvant être raccordée à l'entraînement de mécanisme de découpage de la moissonneuse-batteuse (1) par l'intermédiaire d'une transmission à courroie (7), la transmission à bain d'huile étant montée sur un patin de glissement (8) latéral, articulé de façon à pouvoir pivoter autour d'un axe transversal (A) horizontal, au moyen d'un bras pivotant (9) monté sur le mécanisme de découpage de moissonneuse-batteuse (10).
